# EUROPEAN PATENT APPLICATION

(11) **EP 4 660 911 A1**
(43) Date of publication of application: **10.12.2025**
(21) Application number: 24778302.0
(22) Date of filing: 01.04.2024
(51) Int. Cl.: G06Q 10/0875

(54) **ORDER PROCESSING METHOD AND APPARATUS, TASK SCHEDULING METHOD AND APPARATUS, AND ELECTRONIC DEVICE**

(30) Priority: 31.03.2023 CN 202310379422
(71) Applicant: Hangzhou Hikrobot Co., Ltd., Hangzhou, Zhejiang 310051 (CN)
(72) Inventor: YANG, Bing, Hangzhou, Zhejiang 310051 (CN)
(74) Representative: Michalski Hüttermann & Partner Patentanwälte mbB
(86) International application number: PCT/CN2024/085135
(87) International publication number: WO 2024/199517

(57) **Abstract**

Embodiments of the present application provide an order processing method and apparatus, a task scheduling method and apparatus and an electronic device. In the embodiments, workstations in a warehouse are grouped, where workstations that are closer to each other or process orders with same service attributes are grouped into one group; when shelves of a target order are determined, it is first determined whether shelves corresponding to a current workstation meet the target order, and when the shelves corresponding to the current workstation do not meet the target order, it is further determined whether shelves corresponding to a current workstation group where the current workstation is located meet the target order, enriching priorities of matched shelves, and compared to determining shelves only according to distances between the shelves and the current workstation, reducing a shelf transportation distance, accelerating order processing efficiency, and improving material outbound efficiency.

## Description

### TECHNICAL FIELD

**The** present application relates to the field of robots, and in particular, to an order processing method and apparatus, a task scheduling method and apparatus and an electronic device.

### BACKGROUND

**At** present, in logistics applications, a corresponding target shelf is usually hit by an order according to distances between a workstation and shelves. However, in the logistics applications, there are many workstations, and often, due to the influence of sites or services, there exists a situation where some workstations are centralized and some workstations are scattered. Now, the solution of hitting the shelf by using the distances between the single workstation and the shelves is not optimal. For example, a shelf is queuing at a workstation closest to a current workstation; an absolute distance between the shelf and the current workstation is short, but due to the influence of sites, the route distance between the shelf and the current workstation is long, resulting in that the shelf is not a best choice, which may directly affect processing efficiency of subsequent orders.

### SUMMARY

In view of this, embodiments of the present application provide an order processing method and apparatus, a task scheduling method and apparatus and an electronic device to enrich priorities of matched shelves by setting a workstation group, reduce a shelf transportation distance, further accelerate order processing efficiency, and improve material outbound efficiency.

According to a first aspect of the embodiments of the present application, an order processing method is provided. The method includes: for a target order, in response to checking that shelves corresponding to a current workstation do not meet the target order, determining a current workstation group where the current workstation is located, wherein the current workstation group includes the current workstation and at least one candidate workstation; a distance between respective workstations in a same workstation group meets a preset distance requirement, and a work channel between the respective workstations supports robot passing, and/or service attributes of orders supported by shelves corresponding to respective workstations in a same workstation group are same; determining at least one target shelf matching the target order from shelves corresponding to the at least one candidate workstation included in the current workstation group, each of the at least one target shelf meeting at least one material required in the target order.

According to a second aspect of the embodiments of the present application, a task scheduling method is provided. The method is applied to a scheduling device. The method includes: for each to-be-transported shelf, when receiving a shelf task and a weight coefficient of the to-be-transported shelf sent by a management device, determining a priority of the shelf task corresponding to the to-be-transported shelf according to the weight coefficient of the to-be-transported shelf, where the shelf task includes matching relationships between the to-be-transported shelf and all to-be-processed orders; where the weight coefficient is determined according to a sum of a quantity of order rows for materials required in at least one candidate order corresponding to the to-be-transported shelf as well as a quantity of at least one to-be-released order corresponding to the to-be-transported shelf, where, if the to-be-transported shelf meets all materials required in a to-be-processed order, the to-be-processed order is a to-be-released order corresponding to the to-be-transported shelf, and if the to-be-transported shelf does not meet all materials required in any one to-be-processed order but meets at least one material in a to-be-processed order, the to-be-processed order is a candidate order corresponding to the to-be-transported shelf; the to-be-transported shelf is a shelf matching a target order that is determined from a specified shelf storage area when shelves corresponding to a current workstation do not meet the target order and none of shelves corresponding to at least one candidate workstation included in a current workstation group match the target order, and all the to-be-processed orders include at least the target order; processing the shelf task corresponding to the to-be-transported shelf according to the priority of the shelf task corresponding to the to-be-transported shelf.

According to a third aspect of the embodiments of the present application, an order processing apparatus is provided. The apparatus includes: an order determining module, configured to, for a target order, in response to checking that shelves corresponding to a current workstation do not meet the target order, determine a current workstation group where the current workstation is located, wherein the current workstation group includes the current workstation and at least one candidate workstation; a distance between respective workstations in a same workstation group meets a preset distance requirement, and a work channel between the respective workstations supports robot passing, and/or service attributes of orders supported by shelves corresponding to respective workstations in a same workstation group are same; an order processing module, configured to determine at least one target shelf matching the target order from shelves corresponding to the at least one candidate workstation included in the current workstation group, each of the at least one target shelf meeting at least one material required in the target order.

According to a fourth aspect of the embodiments of the present application, a task scheduling apparatus is provided. The apparatus is applied to a scheduling device. The apparatus includes: a priority determining module, configured to, for each to-be-transported shelf, when receiving a shelf task and a weight coefficient of the to-be-transported shelf sent by a management device, determine a priority of the shelf task corresponding to the to-be-transported shelf according to the weight coefficient of the to-be-transported shelf, where the shelf task includes matching relationships between the to-be-transported shelf and all to-be-processed orders; where the weight coefficient is determined according to a sum of a quantity of order rows for materials required in at least one candidate order corresponding to the to-be-transported shelf as well as a quantity of at least one to-be-released order corresponding to the to-be-transported shelf, where, if the to-be-transported shelf meets all materials required in a to-be-processed order, the to-be-processed order is a to-be-released order corresponding to the to-be-transported shelf, and if the to-be-transported shelf does not meet all materials required in any one to-be-processed order but meets at least one material in a to-be-processed order, the to-be-processed order is a candidate order corresponding to the to-be-transported shelf; the to-be-transported shelf is a shelf matching a target order that is determined from a specified shelf storage area when shelves corresponding to a current workstation do not meet the target order and none of shelves corresponding to at least one candidate workstation included in a current workstation group match the target order, and all the to-be-processed orders include at least the target order; a shelf task processing module, configured to process the shelf task corresponding to the to-be-transported shelf according to the priority of the shelf task corresponding to the to-be-transported shelf.

According to a fifth aspect of the embodiments of the present application, an electronic device is provided. The electronic device includes a machine readable storage medium and a processor, where the machine readable storage medium stores machine executable instructions executable by the processor; the processor is configured to read the machine executable instructions to implement steps of the order processing method according to the first aspect or steps of the task scheduling method according to the second aspect.

### BRIEF DESCRIPTION OF THE DRAWINGS

**FIG.** 1 is a flowchart of an order processing method according to an embodiment of the present application.
FIG. 2 is an example diagram of workstation grouping according to an embodiment of the present application.
FIG. 3 is a flowchart of a task scheduling method according to an embodiment of the present application.
FIG. 4 is an example diagram of a task scheduling interaction system according to an embodiment of the present application.
FIG. 5 is a block diagram of an order processing apparatus according to an embodiment of the present application.
FIG. 6 is a block diagram of a task scheduling apparatus according to an embodiment of the present application.
FIG. 7 is a block diagram of an electronic device according to an embodiment of the present application.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present application. Rather, they are merely examples of apparatuses and methods consistent with some aspects of the present application as detailed in the appended claims.

The terms used in the present application are for the purpose of describing particular examples only, and are not intended to limit the present application. Terms determined by "a", "the" and "said" in their singular forms in the present application and the appended claims are also intended to include plurality, unless clearly indicated otherwise in the context. It should also be understood that the term "and/or" as used herein refers to and includes any and all possible combinations of one or more of the associated listed items.

It is to be understood that, although terms "first," "second," "third," and the like may be used in the present application to describe various information, such information should not be limited to these terms. These terms are only used to distinguish one category of information from another. For example, without departing from the scope of the present application, first information may be referred as second information; and similarly, second information may also be referred as first information. Depending on the context, the word "if" as used herein may be interpreted as "when" or "upon" or "in response to determining".

Next, the embodiments in the specification will be described in detail.

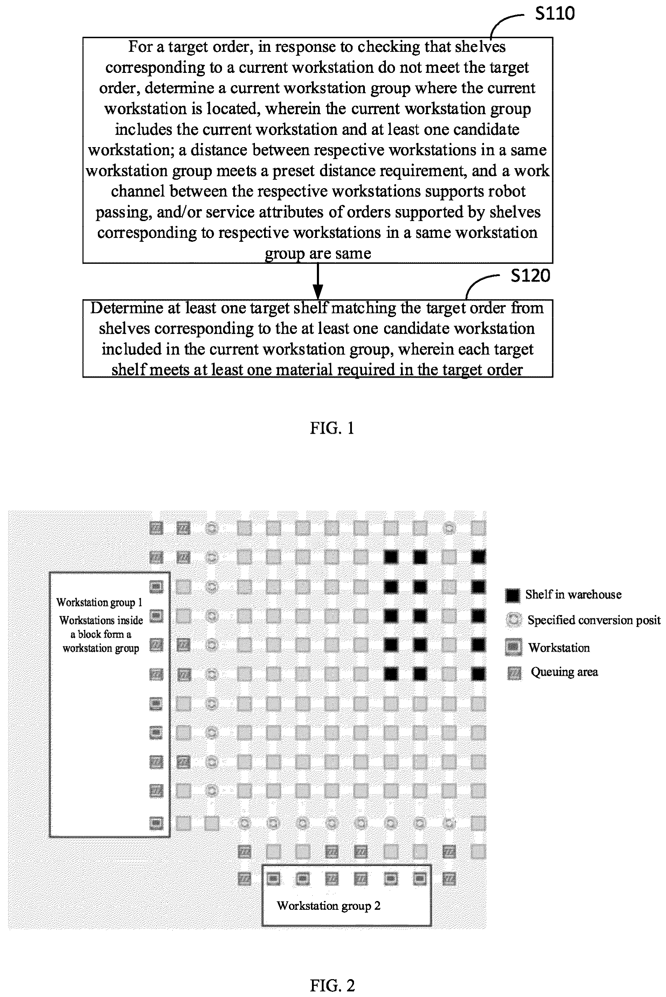

FIG. 1 is a flowchart of an order processing method according to an embodiment of the present application. The method is applied to a management device, such as an electronic computer. As an example, in a logistics scenario, a warehouse management system APP can be downloaded on the management device, and the warehouse management system is used for managing inventory of a warehouse, configuring basic information of the warehouse and being responsible for processing tasks and data generated by inbound and outbound operations of the warehouse.

As shown in FIG. 1, the order processing method may include steps S110 to S120.

At S110, for a target order, in response to checking that shelves corresponding to a current workstation do not meet the target order, a current workstation group where the current workstation is located is determined, where the current workstation group includes the current workstation and at least one candidate workstation; a distance between respective workstations in a same workstation group meets a preset distance requirement, and a work channel between the respective workstations supports robot passing, and/or service attributes of orders supported by shelves corresponding to respective workstations in a same workstation group are same.

In the embodiments, current to-be-processed target orders are allocated to the current workstation by the management device according to an order request sent by the current workstation. Here, the workstation is a location of shelves for processing one or more orders. The workstation has unique identifier information, and the identifier information may be a number, for example, workstation No. 5, or be English, for example, workstation A, or be a combination of a number and English, or be other identifier. The identifier information is not particularly limited in the embodiments of the present application, and may be determined by a person skilled in the art according to actual conditions.

In the embodiments, shelves may be placed at a workstation, and when the shelves are transported to the workstation, a staff may pick corresponding materials from the shelves according to material information in an order. In a conventional solution, a shelf is hit by using locations of a workstation and shelves and distances there-between. However, in a goods-to-person project, there are many workstations, and often, due to the influence of sites or services, some workstations are centralized and some workstations are scattered. The solution of hitting the shelf by using the distances between the single workstation and the shelves is not optimal. In some cases, a shelf is queuing at a workstation closest to a current workstation, and an absolute distance between the shelf and the current workstation is short, but due to the influence of sites, a route distance between the shelf and the current workstation is long, resulting in that the shelf is not a best choice. In some other cases, a shelf is queuing at a workstation closest to a current workstation, and an absolute distance between the shelf and the current workstation is short, but the two workstations have different services and share fewer shelves; after the shelf is hit, there are fewer types of materials that can be picked from the shelf within a future period of time in the current workstation, which may directly affect a hit rate of a subsequent shelf, and improve a probability of workstations occupying the shelf.

In the embodiments, a preset quantity of orders (for example, 10 orders) may be processed simultaneously at each workstation. At a workstation, after the processing of the preset quantity of orders is completed, a processor at the workstation releases the task of the orders, and after the releasing is completed, the processor at the workstation may continue to send an order request to the management device through a wired or wireless network, where the order request may carry a quantity of orders that can be processed by the workstation, identifier information of the workstation, and the like.

In the embodiments, many to-be-processed orders are stored in the management device. The to-be-processed orders may be submitted by users after placing orders on an applet, an APP, a webpage, or the like of a third-party terminal, or be created by users directly on an operation interface of the management device, which is not particularly limited in the embodiments of the present application.

A method of determining, by the management device, at least one target order corresponding to an order request may be, for example, randomly matching from to-be-processed orders, or matching in a descending order of to-be-processed orders arriving, which is not particularly limited in the embodiments of the present application.

In the embodiments, in step S110, the shelves corresponding to the current workstation may include: shelves transported to the current workstation, and shelves transported to a queuing area of the current workstation, which is not particularly limited in the embodiments of the present application.

In the embodiments, that the shelves corresponding to the current workstation do not meet the target order refers to that the shelves transported to the current workstation and the shelves transported to the queuing area of the current workstation do not include all types of materials required in the target order, or include all types of materials required in the target order, but a quantity of the included materials is less than a quantity of materials required in the target order.

In the embodiments, workstation groups are pre-configured, and each workstation group includes at least two workstations. The workstation groups may be grouped according to service attributes of orders processed by the workstation groups, that is, workstations that process orders with same or similar service attributes are grouped into one group; or the workstation groups may be grouped according to distances between workstations, that is, workstations with distances there-between being less than or equal to a preset distance requirement (for example, 5 meters) are grouped into one group. The work channel between the respective workstations in the same workstation group supports robot passing. Here, that the work channel supports the robot passing refers to: there is no obstacle that affects robot travelling on the work channel.

In the embodiments, the service attributes of the orders refer to material categories to which materials in the orders belong. Here, the material categories may include: a daily chemical category, a tobacco and wine category, a clothing category, and the like, which is not particularly limited in the embodiments of the present application.

It should be noted that, when workstations are grouped, workstation groups may be divided based on both service attribute information of processed orders and distances between the workstations, which is not particularly limited in the embodiments of the present application.

FIG. 2 is an example diagram of workstation grouping, in which, boxes fully filled with black indicate positions of shelves in a warehouse, circles indicate specified conversion positions, boxes partially filled with black indicate positions of workstations, and boxes having white diagonal stripes indicate queuing areas. As shown in FIG. 2, workstation group 1 consists of 5 workstations, workstation group 2 consists of 4 workstations, queuing areas inside the workstation groups are queuing areas of the workstations, and queuing areas outside the workstation groups are queuing areas of the workstation groups.

In the embodiments of the present application, in step S110, when it is checked that the shelves corresponding to the current workstation do not meet the target order, the current workstation group where the current workstation is located is determined. Specifically, the current workstation group where the current workstation is located is determined according to configured workstation groups.

**At** S120, at least one target shelf matching the target order is determined from shelves corresponding to the at least one candidate workstation included in the current workstation group, and each target shelf meets at least one material required in the target order.

**Exemplarily,** in the embodiments, the shelves corresponding to the at least one candidate workstation included in the current workstation group may include: shelves transported to respective workstations in the current workstation group, shelves transported to queuing areas of the respective workstations in the current workstation group, shelves transported to a queuing area of the current workstation group, etc., which is not particularly limited in the embodiments of the present application. In some embodiments, for each candidate workstation, shelves corresponding to the candidate workstation include: shelves at the candidate workstation, and shelves transported to a queuing area of the candidate workstation.

In the embodiments, for a specific process of determining the at least one target shelf matching the target order from the shelves corresponding to the at least one candidate workstation included in the current workstation group, reference may be made to example description of the following embodiments.

**In** the embodiments, picking materials required in the target order from target shelves may be: for example, when the target shelves are transported to the current workstation, a staff, a robotic arm, a robot, or the like may pick corresponding materials from the target shelves according to material information in the target order.

So far, the procedures shown in FIG. 1 is completed.

**As** can be seen from the procedures shown in FIG. 1, in the embodiments, by grouping workstations in a warehouse, workstations that are closer to each other or process orders with same service attributes are grouped into one group; when shelves of a target order are determined, it is first determined whether shelves corresponding to a current workstation meet the target order, and when the shelves corresponding to the current workstation do not meet the target order, it is further determined whether shelves corresponding to a current workstation group where the current workstation is located meet the target order, enriching priorities of matched shelves, and compared to determining shelves only according to distances between the shelves and the current workstation, reducing a shelf transportation distance, accelerating order processing efficiency, and improving material outbound efficiency.

As an optional implementation manner of the embodiments of the present application, determining whether the shelves corresponding to the current workstation meet the target order includes:
**if** it is checked that shelves transported to the current workstation do not meet any one material required in the target order, further checking whether shelves transported to a queuing area of the current workstation meet at least one material required in the target order; if the shelves transported to the queuing area of the current workstation do not meet at least one material required in the target order, determining that the shelves corresponding to the current workstation do not meet the target order.

Exemplarily, in the embodiments, each target order includes: at least one piece of material information. Here, the material information includes: a material name and a demanded quantity corresponding to the material name. For example, in an e-commerce application scenario, a user places an order from a shopping APP: 2 bottles of facial cleanser, and 1 bottle of skin care water, such that the target order includes 2 pieces of material information, which are respectively: 1. facial cleanser: 2 bottles; 2. skin care water: 1 bottle.

If it is checked that the shelves transported to the current workstation do not meet any one material required in the target order, it is further checked whether the shelves transported to the queuing area of the current workstation meet at least one material required in the target order; if the shelves transported to the queuing area of the current workstation do not meet at least one material required in the target order, it is determined that the shelves corresponding to the current workstation do not meet the target order.

As an optional implementation manner of the embodiments of the present application, determining the at least one target shelf matching the target order from the shelves corresponding to the at least one candidate workstation included in the current workstation group includes:
if shelves transported to the at least one candidate workstation meet at least one material required in the target order, determining the at least one target shelf matching the target order from the shelves transported to the at least one candidate workstation; if the shelves transported to the at least one candidate workstation do not meet any one material required in the target order, determining the at least one target shelf matching the target order from shelves transported to a queuing area of the at least one candidate workstation, where the target shelf meets at least one material required in the target order.

Exemplarily, in the embodiments of the present application, various materials are stored on shelves in a warehouse, and same materials may be stored on a same shelf or different shelves. In the embodiments, in this step, determining the at least one target shelf matching the target order from the shelves corresponding to the at least one candidate workstation included in the current workstation group includes: if shelves transported to the at least one candidate workstation meet at least one material required in the target order, determining the at least one target shelf matching the target order from the shelves transported to the at least one candidate workstation; if the shelves in the at least one candidate workstation do not meet any one material required in the target order, determining the at least one target shelf matching the target order from shelves transported to a queuing area of the at least one candidate workstation, the target shelf meeting at least one material required in the target order.

**In** the embodiments of the present application, for each target order, target shelves may be matched for the target order in the following sequence: shelves transported to a current workstation, shelves transported to a queuing area of the current workstation, shelves transported to a workstation group to which the current workstation belongs, shelves transported to a queuing area of the workstation group to which the current workstation belongs, shelves hit by other target orders processed by the current workstation but not transported to the workstation, shelves hit by target orders processed by other workstations in the workstation group to which the current workstation belongs but not transported to the workstation group, and shelves not hit by target orders processed by respective workstations in the workstation group to which the current workstation belongs.

It should be noted that the sequence of matching the target shelves is merely an example, which is not used to limit the present application.

As an optional implementation manner of the embodiments of the present application, if the shelves corresponding to the at least one candidate workstation included in the current workstation group do not match the target order, or neither the shelves corresponding to the at least one candidate workstation included in the current workstation group nor shelves corresponding to workstation groups with a distance being less than a preset distance threshold (for example, 20m) from the current workstation group match the target order, the following steps of the method are performed.

The order processing method further includes:
First, to-be-transported shelves matching the target order are determined from a specified shelf storage area.

Exemplarily, in the embodiments, the specified shelf storage area refers to an area where shelves are placed in a warehouse. In this step, determining the to-be-transported shelves matching the target order from the specified shelf storage area may include: determining candidate shelves meeting material information in the target order from the specified shelf storage area according to the material information in the target order, and then determining the to-be-transported shelves matching the target order from the determined candidate shelves.

In the embodiments, determining the to-be-transported shelves matching the target order from the candidate shelves may include: for each material in the target order, if there is one candidate shelf matching the material, directly using the candidate shelf as a to-be-transported shelf of the material, and if there are multiple candidate shelves matching the material, randomly matching one candidate shelf for the material, or matching one candidate shelf for the material according to a preset matching rule, which is not particularly limited in the embodiments of the present application.

Here, there may be many kinds of preset matching rules, such as a first-in-first-out principle, a clearing priority principle, and an efficiency priority principle. Of course, the preset matching rule may be a combination of the multiple principles, which is not particularly limited in the embodiments of the present application.

The first-in-first-out principle refers to preferentially matching, for the material, candidate shelves corresponding to the material that is first warehoused; the clearing priority principle refers to using a candidate shelf that stores a least quantity of the material as a shelf matched for the material; and the efficiency priority principle refers to matching, for the material, candidate shelves meeting a required quantity of the material.

Second, for each to-be-transported shelf, a shelf task and a weight coefficient corresponding to the to-be-transported shelf are determined.

Exemplarily, in the embodiments, the shelf task includes matching relationships between the to-be-transported shelf and all to-be-processed orders, and all the to-be-processed orders include at least the target order.

**In** the embodiments, for each to-be-transported shelf, if the to-be-transported shelf is hit by a to-be-processed order, it is considered that the to-be-transported shelf has a matching relationship with the to-be-processed order. Specifically, the matching relationship may be determined from identifier information of the to-be-transported shelf and identifier information of the to-be-processed order. In the embodiments, all the to-be-processed orders include at least the target order. Each to-be-transported shelf may match one candidate order (that is, the target order), or multiple candidate orders. The identifier information of the to-be-processed order may be a unique order number.

**As** an example, the shelf task further includes: a to-be-transported shelf direction adjustment instruction; and the to-be-transported shelf direction adjustment instruction is used to indicate, when the to-be-transported shelf is moved to a specified conversion position, whether a direction of the to-be-transported shelf needs to be adjusted.

Exemplarily, in the embodiments, the to-be-transported shelf may be a double-sided storage shelf or a multi-sided storage shelf. After the to-be-transported shelf is determined according to material information in a candidate order, a position where the material is stored on the to-be-transported shelf is determined, and whether the direction of the to-be-transported shelf needs to be adjusted is determined according to the position where the material is stored on the to-be-transported shelf.

**In** the embodiments, the specified conversion position may be disposed at a workstation, or at any position between a position of the to-be-transported shelf and a position of the workstation, or at the position of the to-be-transported shelf. The specified conversion position is not particularly limited in the embodiments of the present application.

Specifically, a converter may be disposed at the specified conversion position, and the converter is configured to convert the direction of the shelf, so as to ensure that, when the to-be-transported shelf arrives at a workstation, the direction of the to-be-transported shelf is a direction facilitating picking by a staff. The converter may be a turntable.

The weight coefficient may be determined according to a sum of a quantity of order rows for materials required in at least one candidate order corresponding to the to-be-transported shelf as well as a quantity of at least one to-be-released order corresponding to the to-be-transported shelf. As to how to determine the weight coefficient according to the sum of the quantity of the order rows for the materials required in the at least one candidate order corresponding to the to-be-transported shelf as well as the quantity of the at least one to-be-released order corresponding to the to-be-transported shelf, the following examples are given for description. In some embodiments, the larger the quantity of to-be-released orders is, the greater the weight coefficient may be, which is beneficial for to-be-transported shelves to process all to-be-released orders as soon as possible, so as to schedule the to-be-transported shelves as few as possible to complete processing of a large quantity of to-be-processed orders. In other embodiments, the weight coefficient may be determined by comprehensively considering a sum of a quantity of order rows for materials required in candidate orders and a quantity of order rows for materials required in to-be-released orders corresponding to the to-be-transported shelf. At this time, the larger the quantity of order rows for materials required in all orders corresponding to the to-be-transported shelf is, the greater the weight coefficient is, which is beneficial for all the order rows corresponding to the materials required in the orders on the to-be-transported shelf to be processed as soon as possible, so as to facilitate quick completion of to-be-processed orders.

Next, the shelf task and the weight coefficient are sent to a scheduling device, such that, for each to-be-transported shelf, the scheduling device determines a priority of the shelf task corresponding to the to-be-transported shelf according to the weight coefficient of the to-be-transported shelf, and processes the shelf task corresponding to the to-be-transported shelf according to the priority of the shelf task corresponding to the to-be-transported shelf.

Exemplarily, in the embodiments, in a logistics application scenario, the scheduling device may include: a task scheduling system and a robot control system, where the task scheduling system is responsible for managing a map and shelf information in a warehouse and parsing received shelf tasks; and the robot control system is configured to select a mobile robot for each shelf task, and send a scheduling instruction to the mobile robot. In the embodiments of the present application, the mobile robot may be an Automatic Guided Vehicle (AGV), and the AGV is configured to transport a to-be-transported shelf to a corresponding workstation.

In the embodiments, the task scheduling system, after receiving the shelf task and the weight coefficient, parses the shelf task, and sends the parsed shelf task and the weight coefficient together to the robot control system, and the robot control system determines the priority of the shelf task corresponding to the to-be-transported shelf according to the weight coefficient of the to-be-transported shelf. For example, the greater the weight coefficient is, the higher the priority of the shelf task corresponding to the to-be-transported shelf is. Then, AGVs are scheduled for to-be-transported shelves in a descending sequence of priorities, and a method of scheduling the AGVs is scheduling AGVs closest to the to-be-transported shelves in idle AGVs.

As an optional implementation manner of the embodiments of the present application, the weight coefficient corresponding to the to-be-transported shelf is determined through the following steps.

First, for each to-be-transported shelf, at least one candidate order corresponding to the to-be-transported shelf is determined from all the to-be-processed orders; and at least one to-be-released order corresponding to the to-be-transported shelf is determined from all the to-be-processed orders.

**In** the embodiments, all the to-be-processed orders refer to orders acquired by all workstations. For example, the to-be-processed orders may be submitted by users after placing orders on an applet, an APP, a webpage, or the like of a third-party terminal, or be created by users directly on an operation interface of the management device, which is not particularly limited in the embodiments of the present application.

In the embodiments, if the to-be-transported shelf meets all materials required in a to-be-processed order, the to-be-processed order is a to-be-released order corresponding to the to-be-transported shelf, and if the to-be-transported shelf does not meet all materials required in any one to-be-processed order but meets at least one material in a to-be-processed order, the to-be-processed order is a candidate order corresponding to the to-be-transported shelf.

Second, the weight coefficient corresponding to the to-be-transported shelf is determined according to a sum of a quantity of order rows for materials required in the at least one candidate order corresponding to the to-be-transported shelf as well as a quantity of the at least one to-be-released order corresponding to the to-be-transported shelf.

Exemplarily, in the embodiments, in a candidate order, each order row corresponds to one material and a material quantity, and material types corresponding to different order rows may be same or different.

In the embodiments, in this step, determining the weight coefficient corresponding to the to-be-transported shelf according to the sum of the quantity of the order rows for the materials required in the at least one candidate order corresponding to the to-be-transported shelf as well as the quantity of the at least one to-be-released order corresponding to the to-be-transported shelf includes: adding a product of a first preset weight and the sum of the quantity of the order rows for the materials required in the at least one candidate order corresponding to the to-be-transported shelf, to a product of a second preset weight and the quantity of the at least one to-be-released order corresponding to the to-be-transported shelf. Both the first preset weight and the second preset weight are preset positive numbers. The first preset weight and the second preset weight are not particularly limited in the embodiments of the present application, and may be determined according to actual conditions.

As an optional implementation manner of the embodiments of the present application, the target order is determined through the following steps:
if a quantity M of orders with an order type being a first type in current to-be-processed orders is greater than or equal to N, selecting N orders with an order type being the first type, where the first type indicates being urgent, and N refers to a quantity of orders carried in an order request;
if the quantity M of orders with the order type being the first type in the current to-be-processed orders is less than N, selecting the M orders with an order type being the first type, and selecting N-M orders from orders with an order type being a second type in the current to-be-processed orders, where a receiving time of the N-M orders is earlier than that of orders with an order type being the second type in other remaining to-be-processed orders, and the second type indicates being non-urgent. In other words, the target order is determined through the following steps: in response to an order request initiated by the current workstation, checking a quantity M of orders with a first type in current to-be-processed orders, where the first type indicates being urgent, and the order request carries a demanded quantity N of orders of the current workstation; if the quantity M is greater than or equal to the demanded quantity N of the orders, selecting N orders from the M orders with the first type as target orders and allocating the target orders to the current workstation; if the quantity M is less than the demanded quantity N of the orders, selecting the M orders with the first type and N-M other orders from the current to-be-processed orders as target orders and allocating the target orders to the current workstation, where the N-M other orders are orders with a second type and an earliest receiving time in the current to-be-processed orders, and the second type indicates being non-urgent.

Exemplarily, when a quantity M of current to-be-processed urgent orders is greater than or equal to a demanded quantity N of orders carried in an order request, N urgent orders are matched in a descending sequence of receiving times of orders, and when the quantity M of the current to-be-processed urgent orders is less than the demanded quantity N of the orders carried in the order request, the urgent orders are matched first, and then N-M non-urgent orders are matched in a descending sequence of receiving times of non-urgent orders.

As an optional implementation manner of the embodiments of the present application, when a time difference between a receiving time of a non-urgent order and a current time is greater than a preset time threshold (for example, 30 days), the non-urgent order is preferentially matched, and then orders with an order type being urgent are matched.

It should be noted that, if a sum of a quantity of urgent orders and a quantity of non-urgent orders is less than a demanded quantity N of orders, all the urgent orders and the non-urgent orders are matched for the order request.

According to the embodiments of the present application, both order types and order receiving times are considered to match orders, resulting in that the matching method is more reasonable, and a case where orders are not processed for a long time is avoided.

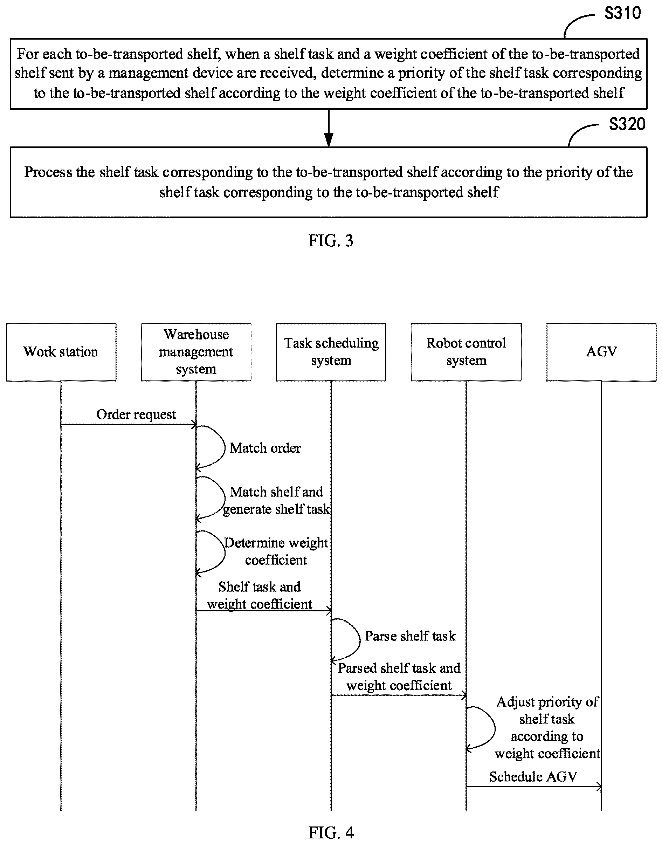

FIG. 3 is a flowchart of a task scheduling method according to an embodiment of the present application. The method is applied to a scheduling device. As an example, in a logistics scenario, the scheduling device may include: a task scheduling system and a robot control system, where the task scheduling system is responsible for managing a map and shelf information in a warehouse and parsing received shelf tasks; and the robot control system is configured to select a mobile robot for each shelf task, and send a scheduling instruction to the mobile robot.

As shown in FIG. 3, the task scheduling method may include the following steps.

At S310, for each to-be-transported shelf, when a shelf task and a weight coefficient of the to-be-transported shelf sent by a management device are received, a priority of the shelf task corresponding to the to-be-transported shelf is determined according to the weight coefficient of the to-be-transported shelf.

Exemplarily, in the embodiments, in a logistics scenario, the management device may be a warehouse management system, and the warehouse management system is used for managing inventory of a warehouse, configuring basic information of the warehouse and being responsible for processing tasks and data generated by inbound and outbound operations of the warehouse.

Exemplarily, in the embodiments, the shelf task includes matching relationships between the to-be-transported shelf and to-be-processed orders, and a to-be-transported shelf direction adjustment instruction. Here, the to-be-transported shelf direction adjustment instruction is used to indicate, when the to-be-transported shelf is moved to a specified conversion position, whether a direction of the to-be-transported shelf needs to be adjusted, such that, when the to-be-transported shelf is moved to a workstation, the direction of the to-be-transported shelf meets picking of materials required in at least one candidate order. In other words, meeting the picking of the materials required in the at least one candidate order indicates making the direction where the to-be-transported shelf faces convenient for a staff or a robotic arm or the like of a workstation to pick the materials from the to-be-transported shelf.

In the embodiments, for each to-be-transported shelf, the weight coefficient is determined according to a sum of a quantity of order rows for materials required in at least one candidate order corresponding to the to-be-transported shelf as well as a quantity of at least one to-be-released order corresponding to the to-be-transported shelf. For a specific determination method, reference may be made to the description of the above embodiments.

If the to-be-transported shelf meets all materials required in a to-be-processed order, the to-be-processed order is a to-be-released order corresponding to the to-be-transported shelf, and if the to-be-transported shelf does not meet all materials required in any one to-be-processed order but meets at least one material in a to-be-processed order, the to-be-processed order is a candidate order corresponding to the to-be-transported shelf; the to-be-transported shelf is a shelf matching a target order that is determined from a specified shelf storage area when shelves corresponding to a current workstation do not meet the target order and none of shelves corresponding to at least one candidate workstation included in a current workstation group match the target order. For a specific implementation manner, reference may be made to the specific description of the above embodiments.

Exemplarily, in the embodiments, there are many implementation manners of determining the priority of the shelf task corresponding to the to-be-transported shelf according to the weight coefficient of the to-be-transported shelf. For example, the weight coefficient of the to-be-transported shelf is positively related to the priority of the shelf task corresponding to the to-be-transported shelf, that is, the higher the weight coefficient is, the higher the priority of the shelf task is.

At S320, the shelf task corresponding to the to-be-transported shelf is processed according to the priority of the shelf task corresponding to the to-be-transported shelf.

Exemplarily, in the embodiments, processing the shelf task corresponding to the to-be-transported shelf according to the priority of the shelf task corresponding to the to-be-transported shelf may include: processing shelf tasks corresponding to respective to-be-transported shelves in a descending sequence of priorities of the shelf tasks corresponding to the to-be-transported shelves.

So far, the procedures shown in FIG. 3 are completed.

As can be seen from the procedures shown in FIG. 3, in the embodiments, for each to-be-transported shelf, the priority of the shelf task corresponding to the to-be-transported shelf is determined according to the received weight coefficient of the to-be-transported shelf, and the shelf task corresponding to the to-be-transported shelf is processed according to the priority, controlling a sequence of to-be-transported shelves arriving at a workstation, improving an order processing speed, accelerating release of order tasks, and improving outbound efficiency.

As an optional implementation manner of the embodiments of the present application, determining the priority of the shelf task corresponding to the to-be-transported shelf according to the weight coefficient of the to-be-transported shelf includes following steps.

First, a transportation cost value of the to-be-transported shelf is acquired.

Exemplarily, in the embodiments, the transportation cost value is used to indicate a contribution degree of transporting the to-be-transported shelf to the to-be-released order. The transportation cost value may be determined according to a distance from the to-be-transported shelf to a workstation corresponding to the to-be-transported shelf, or a quantity of shelves transported to a queuing area of the workstation corresponding to the to-be-transported shelf, or an order type of candidate orders corresponding to the to-be-transported shelf, or any two or three thereof. A determination method of the transportation cost value is not particularly determined in the embodiments of the present application, and may be determined according to actual conditions.

As a specific embodiment of the present application, the transportation cost value is determined by performing a specified calculation according to a product of a preset distance weight and a distance from the to-be-transported shelf to a workstation corresponding to the to-be-transported shelf , a product of a preset quantity weight and a quantity of shelves transported to a queuing area of the workstation corresponding to the to-be-transported shelf, and a product of a preset type weight and an order type of candidate orders corresponding to the to-be-transported shelf.

The preset distance weight is a preset positive number, the preset quantity weight is a preset positive number, and the preset type weight is a preset negative number. The numerical values are not limited in the embodiments of the present application, and may be determined according to actual needs. For the order type, a first type may be 1, and a second type may be 0. Quantization of the order type is not particularly limited in the embodiments of the present application, and may be determined according to actual conditions.

Second, the priority of the shelf task corresponding to the to-be-transported shelf is determined according to the weight coefficient of the to-be-transported shelf and the transportation cost value of the to-be-transported shelf.

Exemplarily, determining the priority of the shelf task corresponding to the to-be-transported shelf according to the weight coefficient and the transportation cost value may be that the smaller the sum of an opposite number of the weight coefficient and the transportation cost value is, the higher the priority of the shelf task is. A determination method of the priority of the shelf task is not particularly limited in the embodiments of the present application, and may be determined by a person skilled in the art according to actual conditions.

FIG. 4 is an example diagram of a task scheduling interaction system according to an embodiment of the present application. The task scheduling interaction system includes: a workstation, a warehouse management system, a task scheduling system, a robot control system, and an AGV. A specific interaction process is as follows:
1. the workstation sends an order request to the warehouse management system;
2. the warehouse management system matches target orders for the current workstation according to a quantity of orders carried in the received order request sent by the current workstation;
3. for each target order, the warehouse management system matches at least one target shelf for the target order;
4. for each to-be-transported shelf in the target shelves, the warehouse management system calculates a shelf task and a weight coefficient of each to-be-transported shelf;
5. the warehouse management system sends the shelf task and the weight coefficient of each to-be-transported shelf together to the task scheduling system;
6. the task scheduling system parses each shelf task, and sends each parsed shelf task and the weight coefficient together to the robot control system;
7. the robot control system ranks priorities of shelf tasks according to weight coefficients, and allocates the AGV to each to-be-transported shelf in a descending sequence of the priorities;
8. the AGV transports the to-be-transported shelf according to a received instruction.

For specific implementation manners and effects, reference may be made to implementation processes of corresponding steps in the above methods, which will not be repeated here.

The methods provided in the embodiments of the present application have been described above. Apparatuses provided in the embodiments of the present application will be described below.

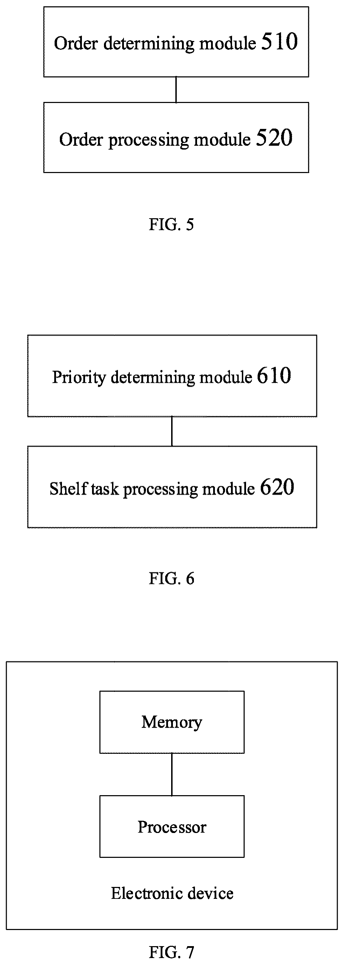

FIG. 5 is a structural diagram of an order processing apparatus according to an embodiment of the present application. The apparatus is applied to a management device, and may include:
an order determining module 510, configured to, for a target order, if checking that shelves corresponding to a current workstation do not meet the target order, determine a current workstation group where the current workstation is located, wherein the current workstation group includes the current workstation and at least one candidate workstation; a distance between respective workstations in a same workstation group meets a preset distance requirement, and a work channel between the respective workstations supports robot passing, and/or service attributes of orders supported by shelves corresponding to respective workstations in a same workstation group are same;
an order processing module 520, configured to determine at least one target shelf matching the target order from shelves corresponding to the at least one candidate workstation included in the current workstation group, each of the at least one target shelf meeting at least one material required in the target order.

As an optional implementation manner of the embodiments of the present application, the order determining module 510 is configured to:
if checking that shelves transported to the current workstation do not meet at least one material required in the target order, further check whether shelves transported to a queuing area of the current workstation meet at least one material required in the target order; if the shelves transported to the queuing area of the current workstation do not meet at least one material required in the target order, determine that the shelves corresponding to the current workstation do not meet the target order.

As an optional implementation manner of the embodiments of the present application, the order processing module 520 is configured to:
if determining that shelves transported to the at least one candidate workstation meet at least one material required in the target order, determine the at least one target shelf matching the target order from the shelves transported to the at least one candidate workstation; in response to determining that the shelves transported to the at least one candidate workstation do not meet any one material required in the target order, determine the at least one target shelf matching the target order from shelves transported to a queuing area of the at least one candidate workstation, the target shelf meeting at least one material required in the target order.

As an optional implementation manner of the embodiments of the present application, if none of the shelves corresponding to the at least one candidate workstation included in the current workstation group match the target order, the apparatus further includes:
a to-be-transported shelf determining module, configured to determine to-be-transported shelves matching the target order from a specified shelf storage area;
a shelf task and weight coefficient determining module, configured to, for each to-be-transported shelf, determine a shelf task and a weight coefficient corresponding to the to-be-transported shelf, where the shelf task includes matching relationships between the to-be-transported shelf and all to-be-processed orders, and all the to-be-processed orders include at least the target order;
a shelf processing module, configured to send the shelf task and the weight coefficient to a scheduling device, such that the scheduling device determines a priority of the shelf task corresponding to the to-be-transported shelf according to the weight coefficient of the to-be-transported shelf, and processes the shelf task corresponding to the to-be-transported shelf according to the priority.

As an optional implementation manner of the embodiments of the present application, the weight coefficient corresponding to the to-be-transported shelf is determined through the following steps: determining at least one candidate order corresponding to the to-be-transported shelf from all the to-be-processed orders; determining at least one to-be-released order corresponding to the to-be-transported shelf from all the to-be-processed orders, where, if the to-be-transported shelf meets all materials required in a to-be-processed order, the to-be-processed order is a to-be-released order corresponding to the to-be-transported shelf, and if the to-be-transported shelf does not meet all materials required in any one to-be-processed order but meets at least one material in a to-be-processed order, the to-be-processed order is a candidate order corresponding to the to-be-transported shelf;
determining the weight coefficient corresponding to the to-be-transported shelf according to a sum of a quantity of order rows for materials required in the at least one candidate order corresponding to the to-be-transported shelf as well as a quantity of the at least one to-be-released order corresponding to the to-be-transported shelf.

As an optional implementation manner of the embodiments of the present application, the shelf task further includes: a to-be-transported shelf direction adjustment instruction; and the to-be-transported shelf direction adjustment instruction is used to indicate, when the to-be-transported shelf is moved to a specified conversion position, whether a direction of the to-be-transported shelf needs to be adjusted, such that, when the to-be-transported shelf is moved to a workstation, the direction of the to-be-transported shelf meets picking of materials required in at least one candidate order.

As an optional implementation manner of the embodiments of the present application, the target order is determined through the following steps: if a quantity M of orders with an order type being a first type in to-be-processed orders is greater than or equal to N, selecting N orders with an order type being the first type, where the first type indicates being urgent, and N refers to a quantity of orders carried in an order request;
if the quantity M of orders with the order type being the first type in the to-be-processed orders is less than N, selecting the M orders with an order type being the first type, and selecting N-M orders from orders with an order type being a second type in all the to-be-processed orders, where a receiving time of the N-M orders is earlier than that of orders with an order type being the second type in other remaining to-be-processed orders, and the second type indicates being non-urgent. In another optional implementation manner, the target order is determined through the following steps: in response to an order request initiated by the current workstation, checking a quantity M of orders with a first type in current to-be-processed orders, where the first type indicates being urgent, and the order request carries a demanded quantity N of orders of the current workstation; if the quantity M is greater than or equal to the demanded quantity N of the orders, selecting N orders from the M orders with the first type as target orders and allocating the target orders to the current workstation; if the quantity M is less than the demanded quantity N of the orders, selecting the M orders with the first type and N-M other orders from the current to-be-processed orders as target orders and allocating the target orders to the current workstation, where the N-M other orders are orders with a second type and an earliest receiving time in the current to-be-processed orders, and the second type indicates being non-urgent.

**For** specific implementation processes of functions and roles of respective units in the apparatus, reference may be made to implementation processes of corresponding steps in the method, which will not be repeated here.

So far, the structural description of the apparatus shown in FIG. 5 is completed.

FIG. 6 is a structural diagram of a task scheduling apparatus according to an embodiment of the present application. The apparatus is applied to a scheduling device, and may include:
a priority determining module 610, configured to, for each to-be-transported shelf, when receiving a shelf task and a weight coefficient of the to-be-transported shelf sent by a management device, determine a priority of the shelf task corresponding to the to-be-transported shelf according to the weight coefficient of the to-be-transported shelf, where the shelf task includes matching relationships between the to-be-transported shelf and all to-be-processed orders; where the weight coefficient is determined according to a sum of a quantity of order rows for materials required in at least one candidate order corresponding to the to-be-transported shelf as well as a quantity of at least one to-be-released order corresponding to the to-be-transported shelf, where, if the to-be-transported shelf meets all materials required in a to-be-processed order, the to-be-processed order is a to-be-released order corresponding to the to-be-transported shelf, and if the to-be-transported shelf does not meet all materials required in any one to-be-processed order but meets at least one material in a to-be-processed order, the to-be-processed order is a candidate order corresponding to the to-be-transported shelf; the to-be-transported shelf is a shelf matching a target order that is determined from a specified shelf storage area when shelves corresponding to a current workstation do not meet the target order and none of shelves corresponding to at least one candidate workstation included in a current workstation group match the target order, and all the to-be-processed orders include at least the target order;
a shelf task processing module 620, configured to process the shelf task corresponding to the to-be-transported shelf according to the priority of the shelf task corresponding to the to-be-transported shelf.

As an optional implementation manner of the embodiments of the present application, the shelf task further includes: a to-be-transported shelf direction adjustment instruction; and the to-be-transported shelf direction adjustment instruction is used to indicate, when the to-be-transported shelf is moved to a specified conversion position, whether a direction of the to-be-transported shelf needs to be adjusted, such that, when the to-be-transported shelf is moved to a workstation, the direction of the to-be-transported shelf meets picking of materials required in the at least one candidate order.

As an optional implementation manner of the embodiments of the present application, the priority determining module 610 is configured to, the weight coefficient of the to-be-transported shelf is positively related to the priority of the shelf task corresponding to the to-be-transported shelf.

As an optional implementation manner of the embodiments of the present application, the priority determining module 610 is configured to, acquire a transportation cost value of the to-be-transported shelf, where the transportation cost value is used to indicate a contribution degree of transporting the to-be-transported shelf to the at least one to-be-released order; determine the priority of the shelf task corresponding to the to-be-transported shelf according to the weight coefficient of the to-be-transported shelf and the transportation cost value of the to-be-transported shelf.

As an optional implementation manner of the embodiments of the present application, for each to-be-transported shelf, the transportation cost value is determined by performing a specified calculation according to a product of a preset distance weight and a distance from the to-be-transported shelf to a workstation corresponding to the to-be-transported shelf , a product of a preset quantity weight and a quantity of shelves transported to a queuing area of the workstation corresponding to the to-be-transported shelf , and a product of a preset type weight and an order type of at least one candidate order corresponding to the to-be-transported shelf.

For specific implementation processes of functions and roles of respective units in the apparatus, reference may be made to implementation processes of corresponding steps in the method, which will not be repeated here.

So far, the structural description of the apparatus shown in FIG. 6 is completed.

Correspondingly, an embodiment of the present application provides a diagram of a hardware structure of the apparatus shown in FIG. 5 or FIG. 6, and specifically, as shown in FIG. 7, the electronic device may be a device for implementing the above methods. As shown in FIG. 7, the hardware structure includes a processor and a memory.

The memory is configured to store machine executable instructions; and the processor is configured to read and execute the machine executable instructions stored in the memory to implement the embodiments corresponding to the order processing method or the embodiments corresponding to the task scheduling method as shown above.

As an example, the memory may be any electronic, magnetic, optical, or other physical storage apparatus, and may contain or store information, such as executable instructions, and data. For example, the memory may be: a volatile memory, a non-volatile memory, or a similar storage medium. Specifically, the memory may be a RAM (Radom Access Memory), a flash memory, a storage drive (such as a hard drive), a solid state hard disk, any type of storage disk (such as an optical disc, and a DVD), or a similar storage medium, or a combination thereof.

So far, the description of the electronic device shown in FIG. 7 is completed.

The above are only some embodiments of the present application, which are not intended to limit the application. Any modification, equivalent replacement, improvement, etc. made within the spirit and principle of this application shall fall into the protection scope of the application.

## Claims

1. An order processing method, applied to a management device for managing workstations, the method comprising:
for a target order, in response to checking that shelves corresponding to a current workstation do not meet the target order, determining a current workstation group where the current workstation is located, wherein the current workstation group comprises the current workstation and at least one candidate workstation; a distance between respective workstations in a same workstation group meets a preset distance requirement, and a work channel between the respective workstations supports robot passing, and/or service attributes of orders supported by shelves corresponding to respective workstations in a same workstation group are same; and
determining at least one target shelf matching the target order from shelves corresponding to the at least one candidate workstation comprised in the current workstation group, each of the at least one target shelf meeting at least one material required in the target order.

2. The method according to claim 1, wherein checking that the shelves corresponding to the current workstation do not meet the target order comprises:
in response to checking that shelves transported to the current workstation do not meet any one material required in the target order, further checking whether shelves transported to a queuing area of the current workstation meet at least one material required in the target order; and
in response to determining that the shelves transported to the queuing area of the current workstation do not meet at least one material required in the target order, determining that the shelves corresponding to the current workstation do not meet the target order.

3. The method according to claim 1, wherein the shelves corresponding to the current workstation comprise:
shelves at the current workstation, and
shelves transported to a queuing area of the current workstation.

4. The method according to claim 1, wherein for each candidate workstation, shelves corresponding to the candidate workstation comprise:
shelves at the candidate workstation, and
shelves transported to a queuing area of the candidate workstation.

5. The method according to claim 1, wherein determining the at least one target shelf matching the target order from the shelves corresponding to the at least one candidate workstation comprised in the current workstation group comprises:
in response to determining that shelves transported to the at least one candidate workstation meet at least one material required in the target order, determining the at least one target shelf matching the target order from the shelves transported to the at least one candidate workstation; and
in response to determining that the shelves transported to the at least one candidate workstation do not meet any one material required in the target order, determining the at least one target shelf matching the target order from shelves transported to a queuing area of the at least one candidate workstation, each of the at least one target shelf meeting at least one material required in the target order.

6. The method according to claim 1, wherein, in response to determining that none of the shelves corresponding to the at least one candidate workstation comprised in the current workstation group match the target order, the method further comprises:
determining to-be-transported shelves matching the target order from a specified shelf storage area;
for each to-be-transported shelf,
determining a shelf task and a weight coefficient corresponding to the to-be-transported shelf, wherein the shelf task comprises matching relationships between the to-be-transported shelf and all to-be-processed orders, and all the to-be-processed orders comprise at least the target order; and
sending the shelf task and the weight coefficient to a scheduling device, such that the scheduling device determines a priority of the shelf task corresponding to the to-be-transported shelf according to the weight coefficient of the to-be-transported shelf, and processes the shelf task corresponding to the to-be-transported shelf according to the priority.

7. The method according to claim 6, wherein, for each to-be-transported shelf, the weight coefficient corresponding to the to-be-transported shelf is determined through the following steps:
determining at least one candidate order corresponding to the to-be-transported shelf from all the to-be-processed orders;
determining at least one to-be-released order corresponding to the to-be-transported shelf from all the to-be-processed orders, wherein, in response to determining that the to-be-transported shelf meets all materials required in a to-be-processed order, the to-be-processed order is a to-be-released order corresponding to the to-be-transported shelf, and in response to determining that the to-be-transported shelf does not meet all materials required in any one to-be-processed order but meets at least one material in a to-be-processed order, the to-be-processed order is a candidate order corresponding to the to-be-transported shelf; and
determining the weight coefficient corresponding to the to-be-transported shelf according to a sum of a quantity of order rows for materials required in the at least one candidate order corresponding to the to-be-transported shelf as well as a quantity of the at least one to-be-released order corresponding to the to-be-transported shelf.

8. The method according to claim 6, wherein the shelf task further comprises: a to-be-transported shelf direction adjustment instruction; and the to-be-transported shelf direction adjustment instruction is used to indicate, when the to-be-transported shelf is moved to a specified conversion position, whether a direction of the to-be-transported shelf needs to be adjusted, such that, when the to-be-transported shelf is moved to a workstation, the direction of the to-be-transported shelf meets picking of materials required in at least one candidate order.

9. The method according to claim 1 or 7, wherein the target order is determined through the following steps:
in response to an order request initiated by the current workstation, checking a quantity M of orders with a first type in current to-be-processed orders, wherein the first type indicates being urgent, and the order request carries a demanded quantity N of orders of the current workstation; and
in response to determining that the quantity M is greater than or equal to the demanded quantity N of the orders, selecting N orders from M orders with the first type as target orders and allocating the target orders to the current workstation; and
in response to determining that the quantity M is less than the demanded quantity N of the orders, selecting the M orders with the first type and N-M other orders from the current to-be-processed orders as target orders and allocating the target orders to the current workstation, wherein the N-M other orders are orders with a second type and an earliest receiving time in the current to-be-processed orders, and the second type indicates being non-urgent.

10. A task scheduling method, applied to a scheduling device, the method comprising:
for each to-be-transported shelf, when receiving a shelf task and a weight coefficient of the to-be-transported shelf sent by a management device, determining a priority of the shelf task corresponding to the to-be-transported shelf according to the weight coefficient of the to-be-transported shelf, wherein the shelf task comprises matching relationships between the to-be-transported shelf and all to-be-processed orders; wherein the weight coefficient is determined according to a sum of a quantity of order rows for materials required in at least one candidate order corresponding to the to-be-transported shelf as well as a quantity of at least one to-be-released order corresponding to the to-be-transported shelf, wherein, in response to determining that the to-be-transported shelf meets all materials required in a to-be-processed order, the to-be-processed order is a to-be-released order corresponding to the to-be-transported shelf, and in response to determining that the to-be-transported shelf does not meet all materials required in any one to-be-processed order but meets at least one material in a to-be-processed order, the to-be-processed order is a candidate order corresponding to the to-be-transported shelf; the to-be-transported shelf is a shelf matching a target order that is determined from a specified shelf storage area when shelves corresponding to a current workstation do not meet the target order and none of shelves corresponding to at least one candidate workstation comprised in a current workstation group match the target order, and all the to-be-processed orders comprise at least the target order; and
processing the shelf task corresponding to the to-be-transported shelf according to the priority of the shelf task corresponding to the to-be-transported shelf.

11. The method according to claim 10, wherein the shelf task further comprises: a to-be-transported shelf direction adjustment instruction; and the to-be-transported shelf direction adjustment instruction is used to indicate, when the to-be-transported shelf is moved to a specified conversion position, whether a direction of the to-be-transported shelf needs to be adjusted, such that, when the to-be-transported shelf is moved to a workstation, the direction of the to-be-transported shelf meets picking of materials required in the at least one candidate order.

12. The method according to claim 10, wherein determining the priority of the shelf task corresponding to the to-be-transported shelf according to the weight coefficient of the to-be-transported shelf comprises:
the weight coefficient of the to-be-transported shelf is positively related to the priority of the shelf task corresponding to the to-be-transported shelf.

13. The method according to claim 10, wherein determining the priority of the shelf task corresponding to the to-be-transported shelf according to the weight coefficient of the to-be-transported shelf comprises:
acquiring a transportation cost value of the to-be-transported shelf, wherein the transportation cost value is used to indicate a contribution degree of the to-be-transported shelf to the at least one to-be-released order; and
determining the priority of the shelf task corresponding to the to-be-transported shelf according to the weight coefficient of the to-be-transported shelf and the transportation cost value of the to-be-transported shelf.

14. The method according to claim 13, wherein, for each to-be-transported shelf, the transportation cost value is determined by performing a specified calculation according to a product of a preset distance weight and a distance from the to-be-transported shelf to a workstation corresponding to the to-be-transported shelf, a product of a preset quantity weight and a quantity of shelves transported to a queuing area of the workstation corresponding to the to-be-transported shelf , and a product of a preset type weight and an order type of at least one candidate order corresponding to the to-be-transported shelf .

15. An order processing apparatus, comprising:
an order determining module, configured to, for a target order, in response to checking that shelves corresponding to a current workstation do not meet the target order, determine a current workstation group where the current workstation is located, wherein the current workstation group comprises the current workstation and at least one candidate workstation; a distance between respective workstations in a same workstation group meets a preset distance requirement, and a work channel between the respective workstations supports robot passing, and/or service attributes of orders supported by shelves corresponding to respective workstations in a same workstation group are same; and
an order processing module, configured to determine at least one target shelf matching the target order from shelves corresponding to the at least one candidate workstation comprised in the current workstation group, each of the at least one target shelf meeting at least one material required in the target order.

16. A task scheduling apparatus, applied to a scheduling device, the apparatus comprising:
a priority determining module, configured to, for each to-be-transported shelf, when receiving a shelf task and a weight coefficient of the to-be-transported shelf sent by a management device, determine a priority of the shelf task corresponding to the to-be-transported shelf according to the weight coefficient of the to-be-transported shelf, wherein the shelf task comprises matching relationships between the to-be-transported shelf and all to-be-processed orders; wherein the weight coefficient is determined according to a sum of a quantity of order rows for materials required in at least one candidate order corresponding to the to-be-transported shelf as well as a quantity of at least one to-be-released order corresponding to the to-be-transported shelf, wherein, in response to determining that the to-be-transported shelf meets all materials required in a to-be-processed order, the to-be-processed order is a to-be-released order corresponding to the to-be-transported shelf, and in response to determining that the to-be-transported shelf does not meet all materials required in any one to-be-processed order but meets at least one material in a to-be-processed order, the to-be-processed order is a candidate order corresponding to the to-be-transported shelf; the to-be-transported shelf is a shelf matching a target order that is determined from a specified shelf storage area when shelves corresponding to a current workstation do not meet the target order and none of shelves corresponding to at least one candidate workstation comprised in a current workstation group match the target order, and all the to-be-processed orders comprise: the target order; and
a shelf task processing module, configured to process the shelf task corresponding to the to-be-transported shelf according to the priority of the shelf task corresponding to the to-be-transported shelf.

17. An electronic device, comprising a machine readable storage medium and a processor,
wherein the machine readable storage medium stores machine executable instructions executable by a processor;
the processor is configured to read the machine executable instructions to implement steps of the order processing method according to any one of claims 1-9 or steps of the task scheduling method according to any one of claims 10-14.
